# EUROPEAN PATENT APPLICATION

(11) **EP 3 075 884 A1**
(43) Date of publication of application: **05.10.2016**
(21) Application number: 15162003.6
(22) Date of filing: 31.03.2015
(51) Int. Cl.: C25B 1/04, C25B 9/08, C25B 11/04, C02F 3/00

(54) **System and method for bio-electrochemical water oxidation**

(71) Applicant: Wageningen Universiteit, 6708 PB Wageningen (NL)
(72) Inventor: Strik, David Petrus Bonifacius Theodorus Bernardus, NL-6706 ET Wageningen (NL); Wetser, Koen, NL-5212 EW 's-Hertogenbosch (NL); Buisman, Cees Jan Nico, NL-8571 RH Harich (NL)
(74) Representative: Verdijck, Gerardus

(57) **Abstract**

The invention relates to a bio-electrochemical system and method for bio-electrochemical water oxidation. The system according to the invention comprises:
- a reactor comprising a bio-electrode compartment with a bio-electrode and a counter electrode compartment with a counter electrode;
- a power supply, and a circuit that in use connects the bio-electrode with the counter electrode; and
- an ion-selective element separating the bio-electrode compartment and the counter
electrode compartment,
wherein the bio-electrode compartment comprises micro-organisms capable of non-photosynthetic catalytic bio-electrochemical water oxidation.

## Description

The invention relates to a system for bio-electrochemical water oxidation, more specifically a system involving a bio-electrode comprising micro-organisms capable of non-photosynthetic catalytic bio-electrochemical water oxidation.

Conventional bio-electrochemical systems (BES) comprise a reactor with an anode compartment having an anode, a cathode compartment having a cathode, and a membrane separating the anode compartment and the cathode compartment. The anode and/or cathode may comprise a bio-electrode with micro-organisms capable of catalysing an oxidation and/or reduction reaction, respectively acting as an electron donor at the anode and/or electron acceptor at the cathode. Micro-organisms catalyse the bio-electrochemical reactions that are performed in the reactor.

Bio-electrochemical systems that are configured for producing electricity are often referred to as microbial fuel cells (MFCs). In MFCs waste water can be supplied to the anode compartment and oxygen is used in the anode compartment as final electron acceptor.

Also known are bio-electrochemical systems that are capable of producing chemicals like hydrogen, ethanol, methane, alkaline, hydrogen peroxide, for example.

Other bio-electrochemical systems are applied in combination with in-situ photosynthesis and are often referred to as microbial solar cells, solar energy power microbial fuel cell, or photo-microbial solar and fuel cell. These cells involve the use of plants, algae and/or bacteria and involve water oxidation by the photosynthetic organism to produce organic matter that can be used as in-situ electron donor at the anode. Such system can be considered a photosynthetic catalytic bio-electrochemical water oxidation system and needs direct solar energy for its performance.

In practice, water oxidation is considered to be a bottle neck preventing the development and introduction of large scale applicable systems. Also the requirement for direct solar energy renders conventional systems ineffective for a wide range of applications.

The invention has for its object to provide a system for bio-electrochemical water oxidation that is more effective and/or efficient obviating or at least reducing one or more of the above drawbacks.

This objective is achieved with the system of a bio-electrochemical water oxidation according to the present invention, the system comprising:
- a reactor comprising a bio-electrode compartment with a bio-electrode and a counter electrode compartment with a counter electrode;
- a power supply, and a circuit that in use connects the bio-electrode with the counter electrode; and
- an ion-selective element separating the bio-electrode compartment and the counter electrode compartment,
wherein the bio-electrode compartment comprises micro-organisms capable of non-photosynthetic catalytic bio-electrochemical water oxidation.

According to the invention, the reactor comprises a bio-electrode compartment and a counter electrode compartment, wherein the bio-electrode compartment comprises electrochemical active micro-organisms capable of performing non-photosynthetic catalytic bio-electrochemical water oxidation and/or oxygen reduction under the influence of a power source and a circuit connecting the electrodes in the system. In use, at the counter electrode corresponding reduction or oxidation reactions can be performed, for example proton reduction into hydrogen and/or reducing CO₂ or other components to carbohydrates, such as acetate, ethanol and methane.

Preferably, the ion-selective element forms an ion-selective layer between the bio-electrode compartment and the counter electrode compartment. This element or layer preferably acts as an electric isolating ion exchanging layer. In a presently preferred embodiment the ion-selective element or layer comprises an ion-selective membrane.

Preferably, the element separating the anode and cathode compartments is a proton-selective element, such as a proton-selective membrane. By providing a proton-selective element an effective process can be achieved. It will be understood that other configurations involving other types of elements or membranes would also be possible in accordance with the invention.

The use of non-photosynthetic electrochemically active micro-organisms in the system according to the present invention renders a system applicable for large-scale applications. These micro-organisms are preferably made from earth-abundant materials that require a low over-potential, thereby minimizing energy loss at the conversion. In addition, such micro-organisms are relatively cheap, and in most cases can be self-reparable. This provides a robust and effective system capable of performing non-photosynthetic catalytic bio-electrochemical water oxidation.

As a further effect, sunlight is not required to enable water oxidation in the system according to the invention. In fact, the solar energy capture step can be decoupled from the water oxidation step, such that both systems can be optimized independently and can optionally be installed separately at a geographically optimal location. For example, products like H₂, or ethanol, can be produced at a user friendly location, such as a (petro) station, with energy that is generated at another location, such as with a wetland plant microbial fuel cell or other solar cell. Optionally, also other energy sources can be applied, thereby rendering the system more flexible. The present invention enables large scale water oxidation and production of chemicals like fuels, such as hydrogen, and/or ethanol, methane, alkaline, hydrogen peroxide and other suitable fuels.

The system according to the present invention enables performing water oxidation in an effective and efficient manner. In fact, the system according to the present invention is capable of performing water oxidation with lower energy requirements as compared to chemical water oxidation, for example.

According to the invention, the non-photosynthesizing electrochemically active micro-organisms are capable of exchanging electrons with electrodes to enable water oxidation and/or oxygen reduction. Therefore, the non-photosynthetic catalytic bio-electrochemical water oxidation is performed with the aid of micro-organisms, optionally comprising viable and/or non-viable cells. Optionally, the electrochemical active micro-organisms are combined with other water oxidizing catalysts or mediators, for example including laccases.

The water oxidation can be performed directly or indirectly by the micro-organisms. The indirect water oxidation may involve direct electron transfer involving cytochromes or mediated electron transfer via naturally produced electron shuttles. For example, cyanobacteria may deliver electrons to an anode catalyzing water oxidation. Also, as an alternative or in addition thereto, enzymes could be responsible for water oxidation. An example of such enzyme is the use of laccases, for example immobilized on the bio-anode.

Involving the micro-organisms as a catalyst for the water oxidation enables water oxidation in a wide range of applications, including large scale applications. Using such bio-electrochemical system enables the production of chemicals like fuels with a cost-effective technology.

The water that enters the reactor can be supplied from a number of sources, including tap water, wells, sea water, rain water, river water, waste water.

The electrodes can be made from a number of materials, including activated carbon, non-activated carbon, carbon nano-tubes, graphite, graphene, steel or other electron conducting materials.

As a further effect of the water oxidation in the system according to the invention the produced gaseous chemicals like O₂, H₂ or CH₄ build up pressure in the compartment(s).

In a presently preferred embodiment according to the present invention, the bio-electrode comprises a biofilm comprising at least part of the micro-organisms.

Providing the micro-organisms substantially in a biofilm attached to the electrode and/or located adjacent to the electrode and/or in a porous electrode, enables an effective system that can be performed at a larger scale relatively easy.

In a presently preferred embodiment according to the present invention, the system further comprises one or more intermediate compartments between the bio-electrode compartment and the counter electrode compartment.

Providing an intermediate compartment enables re-use of buffer or desalination.

In a further preferred embodiment according to the present invention, the power source comprises a solar panel.

Providing the power source with one or more solar panels enables a stand-alone application for the system for bio-electrochemical water oxidation. This renders the system applicable also in remote areas.

In a further preferred embodiment according to the present invention the system further comprises a switch configured for switching the system from a water oxidation phase to an oxygen reduction phase.

By providing a switch or a switching mechanism or a switching circuit, the system can easily be changed from a water oxidation phase to an oxygen reduction phase and vice versa. This enables an effective operation of the system according to the present invention.

The invention further also relates to a method for bio-electrochemical water oxidation, the method comprising the steps of:
- providing a system as described above;
- providing power to the bio-electrode;
- performing water oxidation at the bio-electrode with micro-organisms capable of non-photosynthetic catalytic bio-electrochemical water oxidation; and
- performing a reduction reaction at the counter electrode.

The method provides the same effects and advantages as described for the bio-electrochemical system.

Preferably, the water oxidation is performed with the bio-electrode acting as a bio-anode. Preferably, this involves the step of applying an over-potential to the bio-electrode in the range of 0-1000 mV. More preferably, the applied over-potential is in the range of 0-900 mV, and most preferably in the range of 10-500 mV. It will be understood that the specific over-potential that is applied may depend on the design of the system, including materials that are used. Oxygen concentration is preferably in the range of 0-30 mg/l. Also this range may depend on the design of the system.

In a presently preferred embodiment the reduction reaction comprises reduction of protons in hydrogen. The produced hydrogen can be used as a fuel.

Alternatively, or in addition thereto, in a preferred embodiment according to the invention, the reduction reaction comprises reduction of carbon dioxide into other components. These components include carbohydrates, such as acetate, ethanol and/or methane. The produced components can be used as a fuel, for example.

Furthermore, in a presently preferred embodiment, at the counter electrode gasses are produced thereby providing a pressure increase in the reactor. Such gasses may include produced gaseous chemicals like hydrogen or methane. The pressure increase may further enhance the performance of the system according to the present invention.

In another presently preferred embodiment according to the present invention, the method involves switching the system from a water oxidation phase to an oxygen reduction phase, thereby switching from chemicals production to an energy production system. This further enhances the flexibility of the system and method according to the present invention.

Further advantages, features and details of the invention are elucidated on the basis of preferred embodiments thereof, wherein reference is made to the accompanying drawings, in which:
- Figure 1 shows a system according to the invention;
- Figure 2A-B shows the system of figure 1 in a switching configuration; and
- Figure 3 shows experimental results with the system of figure 1.

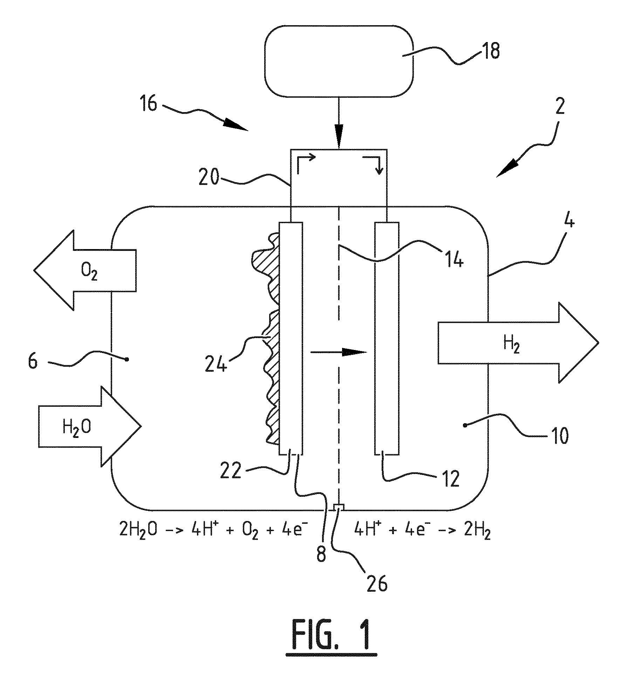

Bio-electrochemical system 2 (figure 1) comprises reactor 4 with bio-electrode compartment 6 that comprises bio-electrode 8, and counter electrode compartment 10 with counter electrode 12. Compartments 6, 10 are separated by ion (proton) selective membrane 14. Circuit 16 comprises power source 18 and connecting circuit 20 that connects electrodes 8, 12 enabling transport of electrons.

Bio-electrode 8 comprises electrode 22 from a conductive material and biofilm 24 comprising the electrochemical active micro-organisms. During water oxidation, ions move from bio-electrode compartment 6 to counter electrode compartment 10.

In the water oxidation phase, the reaction 2H₂O → 4H' + O₂ + 4e⁻ is performed in bio-electrode compartment 6, while reduction reaction 4H⁺ + 4e⁻ →2H₂ is performed in counter electrode compartment 10.

Optionally, inlet 26 enables flashing of reactor 4 and/or electrodes 8, 12, for example with oxygen to maintain a saturated oxygen concentration in the electrode compartments.

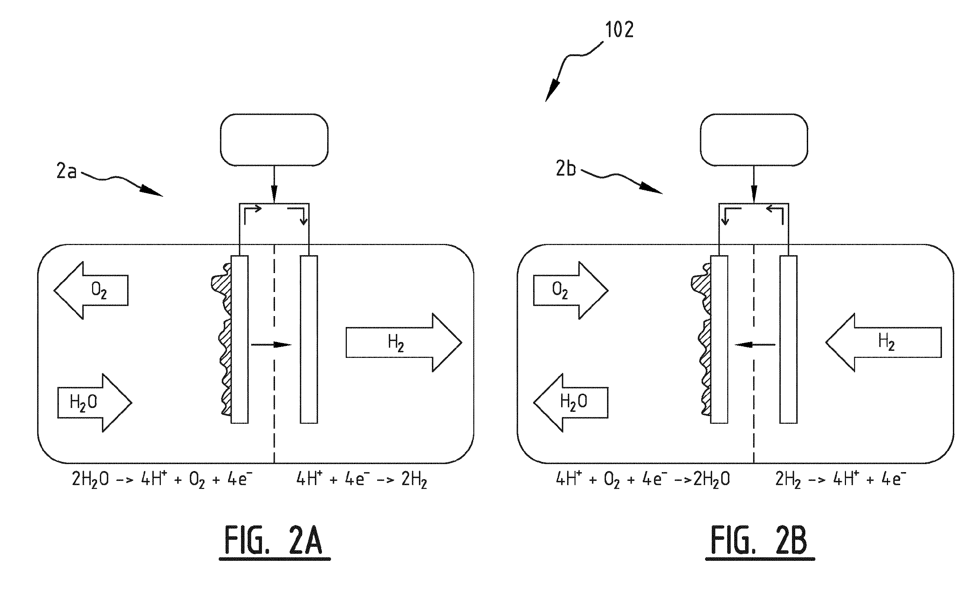

Switching system 102 (figure 2A-B) comprises a bio-electrochemical system 2a that can be used in the water oxidation phase (figure 2A) and can be switched into a water reduction phase in system 2b (figure 2B). In water oxidation phase 2a, the water oxidation mentioned for system 2 is performed. In water reduction phase 2b, water reduction is performed, in bio-electrode compartment 6 with bio-electrode 8 acting as cathode involving the reduction reaction 4H⁺ + O₂ + 4e⁻ → 2H₂O, while in counter electrode compartment 10 at electrode 12 acting as anode the reaction 2H₂ → 4H⁺ + 4e⁻ is performed, with ions moving from counter electrode compartment 10 towards bio-electrode compartment 6.

The system 102 enables water electricity storage using water oxidation for storage of electricity (2a) and using hydrogen to produce electricity (2b).

Below, an experiment with system 2 will be described involving water oxidation to produce hydrogen.

A flat plate BES 2 was constructed similar to BES 2 illustrated in figure 1 and preferably operated in a climate controlled chamber at a temperature of 303K. In this experiment the polarity of the graphite electrodes 6, 10 was changed. When the working electrode was operated as a cathode, the electrolyte of both electrodes consisted of bacterial growth medium with 20mM phosphate buffer, macro- and micro-nutrients and vitamins, at pH 7.0. When the working electrode was operated as anode the macro- and micro-nutrients and vitamins were (substantially) removed, and the electrolytes consisted only of 20mM phosphate buffer at pH 7.0. The nutrients and vitamins were removed to avoid (electrochemical) deposition of, among others, manganese and cobalt on the electrode that could also catalyze water oxidation.

The electrolyte of the working electrode was inoculated with aerobic wastewater from the treatment plant in Bennekom, the Netherlands. First, an oxygen reducing bio-cathode was started. The working electrode was controlled with a Potentiostat in a three electrode set up at 0.15V versus a 3M KCl Ag/AgCl reference electrode (Iviumstat, Netherlands). All electrode potentials are therefore shown versus Ag/AgCl (+0.21V versus NHE). A potential of 0.15 V (i.e. 0.45V over-potential) was selected, because that resulted in a successful startup of an oxygen reducing bio-cathode. Pressurized air was flushed through the electrolytes to maintain saturated oxygen concentration in the electrode compartments. The working electrode operated as bio-cathode for 101 days.

To test the ability of the biofilm to also catalyze the reversible reaction (i.e. oxidize water), the working electrode was three times controlled at 1.3V (i.e. 0.7V over-potential) for water oxidation under applied conditions for 600 seconds with in between an open circuit voltage (OCV) period of 30-60 minutes. The electrolytes were flushed with nitrogen gas before the experiments as well as between these experiments. The pumping of the electrolyte was stopped during the experiments to measure the oxygen concentrations in the electrode compartments. The BES was mixed by placement on a flask-shaker at 75 rpm. After these three periods, the BES was again controlled as cathode (0.15V) and pressurized air was flushed through the electrolytes to reveal whether the biofilm was still able to reduce oxygen.

The water oxidation experiments were repeated after antibiotics were added to the electrolyte (100 mg/L vancomycin, inhibitor of gram positive bacteria and 100 mg/L kanamycin, inhibitor of gram negative bacteria). The applied antibiotics do affect microbial growth and/or activity or even achieve cell dead. Hereafter the biofilm was wiped of the electrode with a tissue with ethanol to confirm that the biofilm was responsible for water oxidation. The water oxidation experiments were also repeated in a blank to be able to compare the production of oxygen. Finally, the same experiments were repeated without applying the electrode potential (i.e. open cell) to confirm that the oxygen was produced due to the applied electrode potential.

Oxygen evolution was measured in both electrode compartments with optical sensors (OXY-4 mini, PreSens, Germany). The Coulombic efficiency (CE) was calculated based on oxygen evolution in the water oxidation compartment and measured current. The electrical energy input for a Microbial Electrolysis Cell (kWh/m³ Hydrogen) was calculated as reported.

A non-photosynthetic active bio-anode, consisting of a biofilm with electrochemically active micro-organisms, was catalyzing water oxidation during bio-anode operation. To achieve this effect mixed culture microorganisms were applied to develop an oxygen reducing bio-cathode polarized at 0.15V and operated pH 7.0. The bio-cathode was operated for 101 days achieving a maximum current density of 0.585A/m². The blank graphite electrode was not able to reduce oxygen at 0.15V electrode potential. Evidently, electrochemical active microorganisms within the developed biofilm were responsible for catalyzing the oxygen reduction reaction. No solar energy or light energy for photosynthesis was directly applied to the electrochemical active microorganisms at the bio-electrode of the BES. The non-photosynthetic biofilm resulted in a higher on-set potential and lower over-potential for oxygen reduction compared to the blank. The cathode current density was 0.035A/m² right before the water oxidation experiments were started. The reversibility of the oxygen reducing bio-cathode was three times measured by applying an electrode potential of 1.3V for 600 seconds.

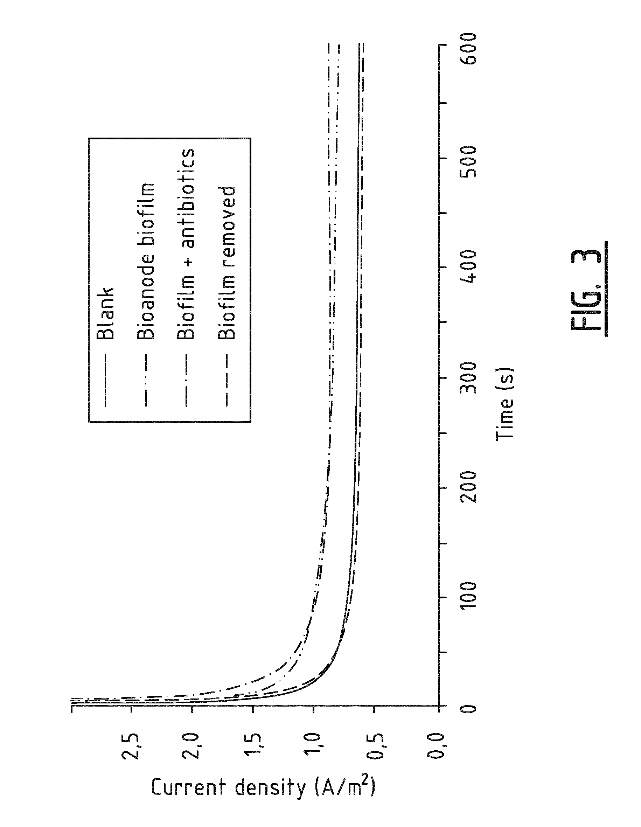

Figure 3 shows the average anodic current density of 3 times 600 seconds polarization at 1.3V of the blank electrode (solid line), the developed bio-anode biofilm (dashed double dotted line), the bio-anode biofilm with antibiotics (dashed dotted line) and the electrode after biofilm removal (dashed line). The significant higher current density and CE (see also Table 1) of the bio-anode biofilm compared to the blank, shows that the bio-anode with electrochemically active micro-organisms was responsible for bio-electrochemical water oxidation. Application of antibiotics clarifies that possibly also the electrochemical active micro-organisms can act as electron donor and/or that dead electrochemical active micro-organisms still may catalyze bio-electrochemical water oxidation. During bio-electrochemical water oxidation protons were likely reduced to hydrogen at the counter electrode. During bio-electrochemical oxygen reduction, hydrogen was possibly oxidized back into protons.

**Table 1: Overview of (bio)electrochemical water oxidation performance of the studied electrodes during 600 seconds polarization at 1.3V.**

| **Studied electrode** | **Average current** (A/m²) | **Maximum oxygen** (mg/L) | **Coulombic efficiency for oxygen evolution (%)** |
|---|---|---|---|
| Blank | 0.70 (+/- 0.00) | 0.22 (+/- 0.06) | 6.1 (+/- 1.7) |
| Bio-anode | 0.93 (+/- 0.02) | 1.03 (+/- 0.08) | 22.0 (+/- 1.3) |
| Bio-anode+antibiotica | 0.97 (+/-0.01) | 0.24 (+/- 0.01) | 5.0 (+/- 0.2) |
| Bio-anode removed | 0.68 (+/- 0.01) | 0.08 (+/- 0.03) | 2.4 (+/- 1.0) |

The experimental results illustrate the possibilities to perform water oxidation the system according to the invention.

The present invention is by no means limited to the above described preferred embodiments thereof. The rights sought are defined by the following claims, within the scope of which many modifications can be envisaged.

## Claims

1. System for bio-electrochemical water oxidation, comprising:
- a reactor comprising a bio-electrode compartment with a bio-electrode and a counter electrode compartment with a counter electrode;
- a power supply, and a circuit that in use connects the bio-electrode with the counter electrode; and
- an ion-selective element separating the bio-electrode compartment and the counter electrode compartment,
wherein the bio-electrode compartment comprises micro-organisms capable of non-photosynthetic catalytic bio-electrochemical water oxidation.

2. System according to claim 1, wherein the ion-selective element comprises an ion-selective membrane.

3. System according to claim 1 or 2, wherein the element is a proton-selective element.

4. System according to claim 1, 2 or 3, wherein the bio-electrode comprises a biofilm comprising at least part of the micro-organisms.

5. System according to one or more of the foregoing claims, further comprising one or more intermediate compartments between the bio-electrode compartment and the counter electrode compartment.

6. System according to one or more of the foregoing claims, wherein the power source comprises a solar panel.

7. System according to one or more of the foregoing claims, further comprising a switch configured for switching the system from a water oxidation phase to an oxygen reduction phase.

8. Method for bio-electrochemical water oxidation, comprising the steps of:
- providing a system as described in one or more of the foregoing claims;
- providing power to the bio-electrode;
- performing water oxidation at the bio-electrode with microorganisms capable of non-photosynthetic catalytic bio-electrochemical water oxidation; and
- performing a reduction reaction at the counter electrode.

9. Method according to claim 8, wherein the water oxidation is performed at the bio-electrode acting as a bio-anode.

10. Method according to claim 8 or 9, further comprising the step of applying an over-potential to the bio-electrode in the range of 0-1000 mV.

11. Method according to claim 8, 9 or 10, wherein the reduction reaction comprises proton reduction into hydrogen.

12. Method according to claim 8, 9 or 10, wherein the reduction reaction comprises carbon dioxide reduction into carbohydrates.

13. Method according to one or more of the foregoing claims 8-12, wherein at the counter electrode gases are produced that provide a pressure increase.

14. Method according to one or more of the foregoing claims 8-13, further comprising the step of switching from a water oxidation phase to an oxygen reduction phase.
